(19) Europäisches Patentamt
European Patent Office
Office européen des brevets

(11) Publication number: 0 072 586
B1

(12) EUROPEAN PATENT SPECIFICATION

(45) Date of publication of patent specification: 05.02.86

(51) Int. Cl.[4]: G 11 B 15/18

(21) Application number: 82200961.9

(22) Date of filing: 28.07.82

# (54) Magnetic tape cassette apparatus.

(30) Priority: 17.08.81 NL 8103831

(43) Date of publication of application:
23.02.83 Bulletin 83/08

(45) Publication of the grant of the patent:
05.02.86 Bulletin 86/06

(84) Designated Contracting States:
CH DE FR GB IT LI NL SE

(56) References cited:
DE-A-1 930 229
DE-A-3 035 527
FR-A-2 186 695
FR-A-2 304 987
FR-A-2 336 762
US-A-3 724 778
US-A-3 874 577
US-A-4 026 497

(73) Proprietor: N.V. Philips' Gloeilampenfabrieken
Groenewoudseweg 1
NL-5621 BA Eindhoven (NL)

(72) Inventor: Schijven, Lucas Wilhelmus Martinus
c/o INT. OCTROOIBUREAU B.V. Prof. Holstlaan 6
NL-5656 AA Eindhoven (NL)

(74) Representative: Smit, Frederik Jan et al
INTERNATIONAAL OCTROOIBUREAU B.V. Prof. Holstlaan 6
NL-5656 AA Eindhoven (NL)

EP 0 072 586 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a magnetic-tape cassette apparatus comprising a chassis on which a head support carrying a pressure roller and a magnetic head is movably mounted, a drive plate carrying drive means for a capstan and at least one winding mandrel, and a cassette compartment for receiving a magnetic-tape cassette, in which compartment an ejection lever is pivotally mounted, which lever is pivoted upon insertion of the cassette into the cassette compartment and during the pivotal movement actuates an ejection member for moving the head support in the direction towards the cassette to bring the pressure roller into cooperative relationship with the capstan and also tensions an ejection spring, which spring is kept in the tensioned condition by latching means, the ejection member forms part of switching means, which further comprise a movable play member, which can be coupled to said head support for moving the head support in the direction away from the cassette to interrupt said cooperative relationship, an actuating button being provided for releasing the ejection spring *via* the latching means and thereby pivoting the ejection lever.

A magnetic-tape cassette apparatus of the above type is known from FR—A—2 186 695. In the known apparatus only an ejection spring is tensioned during pivoting of the ejection lever upon insertion of the cassette, so that this spring is the only source of stored energy. It is therefore impossible to make the stored energy available in stages. During a fast forward mode of the apparatus the head support is retracted relative away from the cassette by partially pushing in the actuating button and coupling the play member to the head support. Since the head support is urged by an additional spring towards the cassette, the force, required for also disengaging the pressure roller from the capstan is comparatively large. This force can only be obtained by manual pushing and cannot be derived from the energy, stored in the ejection spring. In the known apparatus the ejection spring can only be released completely, causing ejection of the cassette so that a comparatively large amount of energy is required to re-start the apparatus. As a result of this, the known construction is not suitable for obtaining a pause mode of the apparatus, in which the pressure roller is disengaged from the capstan, by applying only a small force.

It is the object of the invention to construct an apparatus of the above type in such a way that after insertion of a cassette only a small amount of energy is required for obtaining a pause mode and for moving the head support back upon termination of the pause.

In accordance with the invention said switching means also comprise a pause spring connected to the play member, which spring is tensioned as a result of a coupling between the play member and the ejection member when the ejection member is pivoted upon insertion of the cassette, the play member being latched by a pause latch in the tensioned condition of the pause spring, which pause latch can be actuated independently of the latching means to release the play member and when the pause latch is so actuated the play member is coupled to the head support for moving the head support under the influence of the pause spring in the direction away from the cassette. This results in a construction which enables a pause mode to be obtained without the necessity of releasing the ejection spring. Since the pause spring needs to move the head bracket over a limited distance only, a comparatively weak pause spring may be employed, so that only a moderate amount of energy is required to reset the apparatus from the pause mode to the play mode. The possibility of using a comparatively weak pause spring has the further advantage that for resetting to the play mode a compratively small button suffices. Since the play member and the pause spring connected thereto are also tensioned during insertion of the cassette, no additional operations are needed after insertion of the cassette in the apparatus in accordance with the invention.

It is noted that it is known from US—A—3 724 778 to actuate the head support of a magnetic-tape cassette apparatus by pushing in a start button, which can be latched by a locking bar and cun be released by pushing in another actuating button. After releasing the start button, a kind of pause mode is obtained, in which the pressure roller is disengaged from the capstan and in which the cassette is till inserted. In this known apparatus the head support is actuated independently from the insertion of a cassette. The force, necessary for tensioning the pause spring, cannot be derived from inserting the cassette, but can be obtained by pushing in the start button. Thus an additional operation is needed after insertion of the cassette in the apparatus.

A preferred embodiment of an apparatus in accordance with the invention is characterized in that the pause latch is actuated by a solenoid which is controlled by an electric switch, which also activates the drive means, and which switch is actuated by a switching bar which can be coupled to the actuating button. In this way it is possible to release the pause latch for switching to the pause mode not only by means of a button of the apparatus but also by other electric means. This may be effected by switching off the power supply of the apparatus, in which case the pause mode and a consequent return movement of the pressure roller away from the capstan are obtained. This is of advantage if, for example, the apparatus in accordance with the invention is used in conjunction with a car radio, the apparatus being always set from the play mode to the pause mode by turning off the car ignition. This prevents the pressure roller from being deformed as a result of prolonged engagement with the capstan. In this way it is also possible to control the solenoid by a tachometer arranged underneath the take-up mandrel by electronically de-energizing the solenoid when the tape is stationary. This makes it possible to obtain an automatic change-over to the pause mode upon reaching the end of the tape in the play mode or in the wind mode. By actuating the electric switch by means of the actuating button it is possible to switch to the pause mode and to the eject mode of the apparatus by means of the same actuating button.

A reliable and fast operation of the pause latch is obtained if the pause latch is constituted by a bell-crank lever which during tensioning of the pause spring is urged towards the latched position by a spring.

In this respect a preferred embodiment of an apparatus in accordance with the invention is characterized in that the play member comprises a lug which does not release the bell-crank lever until the pause spring is tensioned and which latches behind a cam on the bell-crank lever. This precludes premature latching of the play member until the pause spring is fully tensioned.

A preferred embodiment of an apparatus in accordance with the invention is characterized in that the switching bar is connected to the play member by a coupling spring through which the play member moves the switching bar when the pause spring is tensioned. This ensures a correct sequence during latching of the play bracket member because the play member actuates the solenoid and thus the pause latch *via* the coupling spring and the switching bar.

In this respect it is also of advantage if the coupling spring is also tensioned when the play member is latched, and the coupling spring is further tensioned when the actuating button is coupled to the switching bar and, after actuation of the pause latch, causes the play member to be moved together with the pause spring. This ensures that the play member is moved not only by the pause spring but also by the coupling spring after unlatching. This not only provides a reliable movement of the play member after unlatching but also ensures a suitable co-ordination between the movements of the play member and the switching bar.

In a preferred embodiment of an apparatus in accordance with the invention a play button is provided which is adapted to move the play member and to tension the pause spring. The play member can be coupled to the switching bar *via* the coupling spring for moving the switching bar, renergizing the solenoid and subsequently re-latching the play member. In this way switching from the pause mode to the play mode of the apparatus is possible, the switching bar being moved first and subsequently the play member in the correct sequence.

In a preferred embodiment of an apparatus in accordance with the invention the play member comprises a portion which, for moving the head support is movable against a pivotal member which is coupled to the head support and which comprises two stops, of which a first stop, against which said portion of the play member can be moved, is disposed at a greater distance from the pivotal axis of said pivotal member than a second stop, which is adapted to co-operate with a switching member of the switching means upon actuation of the latching means and release of the ejection spring. By arranging the first stop and the second stop at a greater and smaller distance, respectively, from the pivotal axis of the pivotal member it is ensured that the play member retracts the head support over a limited distance only, which distance is such that the pressure roller and the magnetic head are suitably just in contact with the magnetic tape in the cassette, whilst upon release of the ejection spring a larger displacement of the head support is obtained by means of the switching member and the second stop, which displacement suffices to move the magnetic head and the pressure roller out of the cassette, so that the cassette can be ejected from the cassette compartment without being impeded.

A preferred embodiment of an apparatus in accordance with the invention is characterized in that the actuating button can be moved from the rest position to a pause position by a displacement in a first direction, in which pause position the pause latch is actuated, and the actuating button is movable to an eject position by a further displacement in the first direction, in which eject position the actuating button can be coupled to a main latch of the latching means, which main latch unlatches the switching member, which member subsequently moves the head support away from the cassette *via* the second stop on said pivotal member. Thus the pause position is always passed during the movement to the eject position. Since for moving the actuating button to the pause position only a small force is required, inadvertently passing to the eject position is substantially precluded.

An embodiment of the invention will now be described in more detail, by way of example, with reference to the drawings.

Figure 1 is an exploded perspective view of those parts of a magnetic-tape cassette apparatus in accordance with the invention which are relevant to the invention, the apparatus being shown in a play mode of operation,

Figure 2 is an exploded perspective view of parts of the apparatus of Figure 1 in the pause-search mode of operation.

Figure 3 is an exploded perspective view of parts of the apparatus of Figure 1 in the fast-wind mode of operation.

Figure 4 is an exploded perspective view of the parts of the apparatus of Figure 1 in the pauseeject mode of operation.

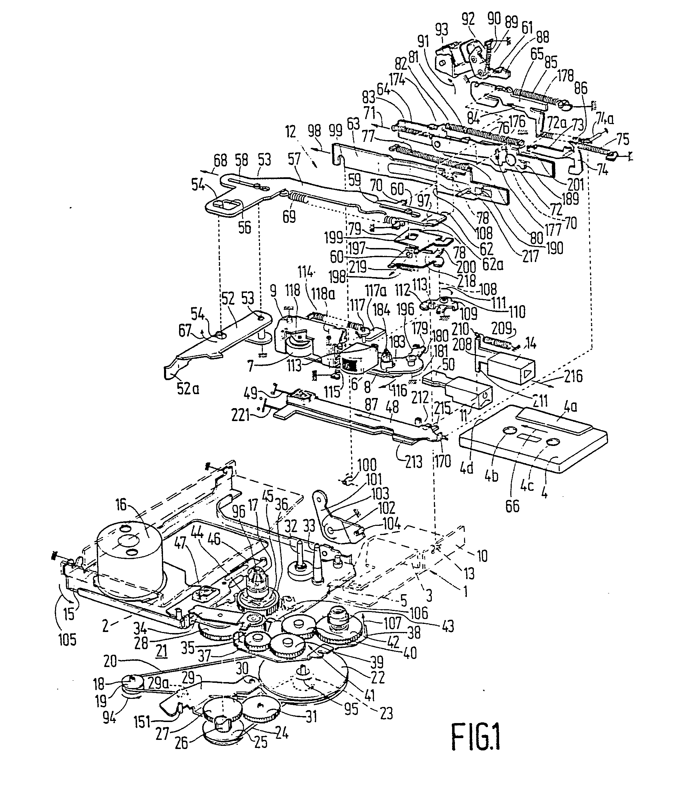

The magnetic-tape cassette apparatus shown in Figure 1 comprises a chassis 1 and is suitably constructed so that the apparatus can be accommodated in a space of limited dimensions. An example of this is a combined use in conjunction with a car radio. Other uses, such as incorporation in a portable radio, are equally possible. For defining a cassette compartment the chassis 1 comprises an upright guide edge 2 and an L-shaped support 3, which edge and support also serve for guiding a magnetic-tape cassette 4, in the present embodiment a cassette of the so-called "Compact-Cassette" type as described in the Applicants' United States Patent Specification 3,394,899. The guide edge 2 and the support 3 are so arranged relative to each other that during insertion the cassette is guided in the longitudinal direction, a leaf spring 5 on the support 5 ensuring that the cassette is pressed against the chassis 1. The support 3 has sufficient height relative to the chassis 1 to permit the passage of the raised front portion 4a of the cassette 4, the leaf spring 5 acting on the adjacent major surface of the cassette 4. The raised front portion 4a comprises a number of openings in the front through which a magnetic head 6 and a pressure roller 7 can pass for co-operation with a magnetic tape in the cassette 4 during operation. The magnetic head 6 and the pressure roller 7 are arranged on a head support 8, which is pivotable about a spindle 9 on the chassis 1.

Adjacent the support 3 the chassis comprises an upright portion forming a support 10, which support an actuating button 11 and which has a number of guide slots in which a number of elongate members of switching means 12 of the apparatus are guided. A guide slot 13 is shown, which is intended for guiding an elongate ejection member 57, whose operation will be described in more detail hereinafter. The support 10 also supports a play or a start button 14, whose operation will also be described hereinafter.

At the side of the chassis 1 which is remote from the support 3 a drive plate 15 is pivotably mounted underneath the chassis 1. The plate 15 is secured to the chassis 1 in such a way as to be pivotable about an axis which is perpendicular to the spindle 9 and to the longitudinal direction of the cassette 4 in the cassette compartment. On the drive plate 15 an electric motor 16 and a take-up mandrel 17 are mounted. On the motor shaft 18 a pulley 19 is mounted, by means of which drive means 21 are driven by the motor 16 *via* a belt 20. The drive means comprise a flywheel 22 having a circumferential groove for receiving the belt 20. The flywheel is rotatably journalled on the drive plate 15 and is rigidly connected at its lower side to a pulley 23. A belt 24 passes around the pulley 23 and a further pulley 25 which is rigidly and coaxially connected to a comparatively small gear-wheel 26 and a large gear-wheel 27. The teeth of the small gear-wheel 26 are in mesh with the teeth of an idler wheel 28 which is rotatably mounted on an arm 29, which arm is pivotally connected to the drive plate 15 by means of a spindle 30. Between the arm 29 and the plate 15 there is arranged a tension spring 29a. In the position of the drive means 21 shown in Figure 1, which corresponds to the play mode of the apparatus, the arm 29 is in a pivoted position under the influence of the spring 29a such that the teeth of the idler wheel 28 are also in mesh with the teeth of a gear wheel 31 which is arranged underneath the take-up mandrel 17 coaxially therewith and which is coupled to said mandrel by means of a slipping clutch, not shown. A capstan 32 which is rigidly connected to the flywheel is arranged on the upper side of the drive plate 15, an opening being formed in the chassis 1 for the passage of the capstan 32 during the upward pivotal movement of the drive plate 15. The drive plate 15 further carries a locating pin 33 which serves for positioning the cassette when the cassette is inserted, for which locating pin a further opening is formed in the chassis 1.

A spindle which is coaxial with the gear wheels 27 and 26 is arranged on the drive plate 15, an arm 34 being pivotable about said spindle. At a free end said arm carries an idler wheel 35, which in the play mode of the apparatus shown in Figure 1 is in mesh only with the teeth of the large gear-wheel 27. In a manner to be described hereinafter the idler wheel 35 can be brought additionally into mesh, by a pivotal movement of the arm 34, with a gear-wheel 36 which is coaxial with the take-up mandrel 17 and which is rigidly connected to said mandrel, or with a gear-wheel, 37 which is rotatably journalled on an auxiliary frame 38. In addition to the gear-wheel 37 two gear-wheels 39 and 40 are rotatably mounted on the auxiliary frame 38, which gear-wheels together with the gear-wheel 37 constitute a transmission means 41 for driving a gear-wheel 42 which is rigidly connected to and is co-axial with a supply mandrel 43. In the chassis 1 two additional openings are formed for the winding mandrels 17 and 43, so that when the drive plate 15 is pivoted upwards the winding mandrels can engage with winding hubs 4b and 4c in the cassette 4.

The auxiliary frame 38 can be moved translationally upwards and downwards relative to the chassis 1 in a manner (not shown) such that the auxiliary frame 38 is moved towards the chassis almost simultaneously with the upward pivotal movement of the drive plate 15. Thus, the winding mandrels 17 and 43 are situated below the chassis 1 during insertion of the cassette 4 and, in a manner to be described hereinafter, are passed through the openings in the chassis to engage with the hubs 4b and 4c respectively upon completion of the insertion of the cassette.

On the upper side of the gear-wheel 36 slip contacts 44 are arranged, which constitute the rotary parts of a tachometer 45 situated underneath the winding mandrel 17. When the drive plate 15 is swung up the slip contacts 44 come into contact with a stator, not shown, of the tachometer 45, which stator is mounted on a printed-circuit board on the underside of the chassis 1. A switching bar 46 is arranged to be rectilinearly movable on the upper side of the drive plate 15. This bar 46 can actuate an electric switch 47, whose contacts are mounted on the printed-circuit board, not shown, which is secured on the underside of the chassis 1. There is further provided a switching bar 48 at the underside of the chassis 1, by means of which bar an electric switch 49 can be actuated.

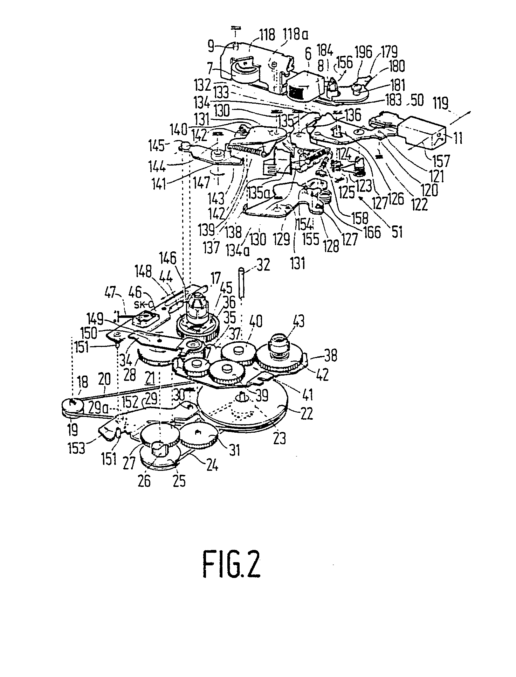

The actuating button 11 is rigidly connected to a lug 50, which can be pivoted in a horizontal plane relative to the chassis 1 and which is guided to be slidable in a direction perpendicular to the support 10. The lug 50 is coupled to a switching mechanism 51 (see Fig. 2) to be described in more detail hereinafter.

In the cassette compartment an ejection lever 52 is arranged on the upper side of the chassis 1 for pivotal movement about a spindle 53. When the cassette 4 is inserted in its longitudinal direction into the cassette compartment the ejection lever is pivoted in a manner to be described hereinafter. The ejection lever 52 comprises a pin 54 on its upper side. The pin 54 engages in a rectangular hole 56 in the ejection member 57, which member forms part of the switching means 12 and is rectinearly movable in a direction parallel to the longitudinal direction of the magnetic-tape cassette 4 in the cassette compartment. For this movement a slot 58 is formed in the ejection member 57, whilst a further slot 59 is formed in the member 57 through which passes a spingle or pin 60 which is rigidly connected to a pivotal member 197 to be described in more detail hereinafter, which member 197 comprises a lug 200, which is pivotable about a stop, not shown, on the chassis 1. The ejection member 57 is also guided in the guide slot 13. It is to be noted that the hole 56 is rectangular for assembly purposes. In principle, the guide opening for the pin 54 may, for example, be triangular. However, it is essential that the pin 54 has sufficient clearance in the bottom-left corner of the hole to allow a free pivotal movement of the lever 52. Viewed in the transverse direction of the member 57, and end portion 62 thereof is slightly narrowed, so that, in a manner to be described hereinafter, an edge 62a of the member 57 can engage behind the support 10 in the play mode of the apparatus. The switching means 12 further comprise an elongate control member 63, which *inter alia* serves to control the pivotal movement of the drive plate 15, an elongate switching member 64, which *inter alia* serves to control the head support 8, and a play member 65, which *inter alia* serves to actuate the switching bar 48 and thus the switch 49 and also to control the head support 8.

It is to noted that for clarity, in each figure only those parts are shown which are relevant to the specific mode of operation of the apparatus and that parts which are not relevant to said mode are not shown in the figure in question. The various parts of the apparatus will now be described in more detail in the next part of the description for the various modes of operation of the apparatus.

A. Play Mode

When the cassette 4 is inserted in the longitudinal direction as indicated by the arrow 66 the end wall 4d of the cassette engages and presses against the free end 52a of the ejection lever 52. In its resulting pivotal movement about the spindle 53, viewed in Fig. 1, the ejection lever 52 moves the pin 54 in the direction of the arrow 67 from the top-left corner of the hole 56 along the edge of the hole to the bottom-left corner. In this movement the pin 54 drives the member 57 in the longitudinal direction as indicated by the arrow 68, so that the slot 58 is moved relative to the spindle 53 in the direction of the arrow 68 into the position shown in Figure 1. At the same time an ejection spring 69 in the form of a tension spring arranged between the member 57 and the chassis 1 is tensioned. During its movement in the direction of the arrow 68 the ejection member 57 moves the switching member 64 *via* a lug 70, the switching member being rectilinearly movable in the direction of an arrow 71 parallel to the arrow 68. The member 64 carries a cam 72 with a spindle 72a which is guided along an edge 73 of a hook 74 during a movement in the direction of the arrow 71. At the end the edge 73 slopes downwards, so that as the spindle 72a moves along this part of the edge, the hook 74, under the influence of a tension spring 75 arranged between the hook and the chassis 1, perform a slight pivotal movement about the spindle 74a in a vertical plate, the travel being approximately 1 mm in the present embodiment. However, this movement suffices to latch the hook beneath a part of the chassis, so that the hook occupies a fixed position. As a result of said movement, the spindle 72a is positioned behind the end of the part of the hook 74 on which the edge 73 is formed, thereby latching the switching member 64 in its extreme position at the end of its movement in the direction of the arrow 71. Thus, the hook 74 functions as a main latch of the latching means of the apparatus. As a result of this, a tension spring 76, which is arranged between the member 64 and the chassis, is tensioned during the movement of the member 64 in the direction of the arrow 71, but in this position said spring is not capable of returning the member 64. The movement of the member 64 also tensions a switching spring 77 arranged between the member 64 and the control member 63. The member 63 cannot more yet, however, because a lug 78 on a latching member 79 engages in a recess 80 in the member 63 and thereby prevents a movement of the member 63.

The play member 65 has a lug 81, which during the movement of the switching member 64 in the direction of the arrow 71 is engaged with a shoulder formed on an auxiliary member 82 which is pivotally connected to the switching member 64. The lug 70 is engaged with another shoulder on the auxiliary member 82, so that indirectly the auxiliary member 82 forms a coupling between the ejection member 57 and the play member 65. A tension spring 83 tends to pivot the auxiliary member 82 upwards, which ensures that at the beginning of each movement in the direction of the arrow 71 the auxiliary member 82 occupies an upper pivoted position. Owing to the movement of the lug 81 by the bracket 82 the play member 65 is moved in the direction of the arrow 84, parallel to the arrow 71. As a result of this, a pause spring 85 formed by a tension spring arranged between the member 65 and the chassis is tensioned. A coupling spring 86 also is tensioned, which spring is arranged between the member 65 and one end of the switching bar 48. As a result of this, the switching bar 48 is also moved in the direction of the arrow 87, so that the switch 49 is closed. As the member 65 is moved a pin-like lug 61 on the member 65 slides over a cam 88 formed on a bell-crank lever 89 which is pivotally connected to the chassis, a tension spring 90 tending to pivot the bell-crank lever 89 in the direction of the arrow 91. This pivotal movement is possible as soon as the lug 61 has passed over the cam 88 and allows an armature 92 arranged in the bell-crank lever 89 to move against the core of a solenoid 93, which solenoid will be referred to herein as the "play solenoid". Simultaneously, the switch 49 is closed, as described above by the movement of the switching rod 48, so that the play solenoid 93 is energized and thereby keeps the bell-crank lever 89 in the pivoted position. As a result of this, the play member 65 is latched in the position of maximum displacement in the direction of the arrow 84, with the spring 85 tensioned owing to the action of the solenoid 93, so that the bell-crank lever 89 functions as a latch.

Since the switch 49 is closed owing to the movement of the switching bar 48 the motor 16 is also energized. The pulley 19 begins to rotate in the direction indicated by the arrow 94 and the flywheel 22 also begins to rotate in the direction of the arrow 95. The capstan 32, which is connected to the flywheel and the pulley 23 then also begin to rotate. *Via* the belt 24, the pulley 25, the small gear-wheel 26, the idler wheel 28 and the gear-wheel 31, the take-up mandrel 17 is set into rotation in a direction indicated by the arrow 96. It is to be noted that this switching sequence prior to a further actuation of the switching means 12 and, in particular, a pivotal movement of the drive plate 15 to the active position serves to prevent tape spillage in the magnetic-tape cassette.

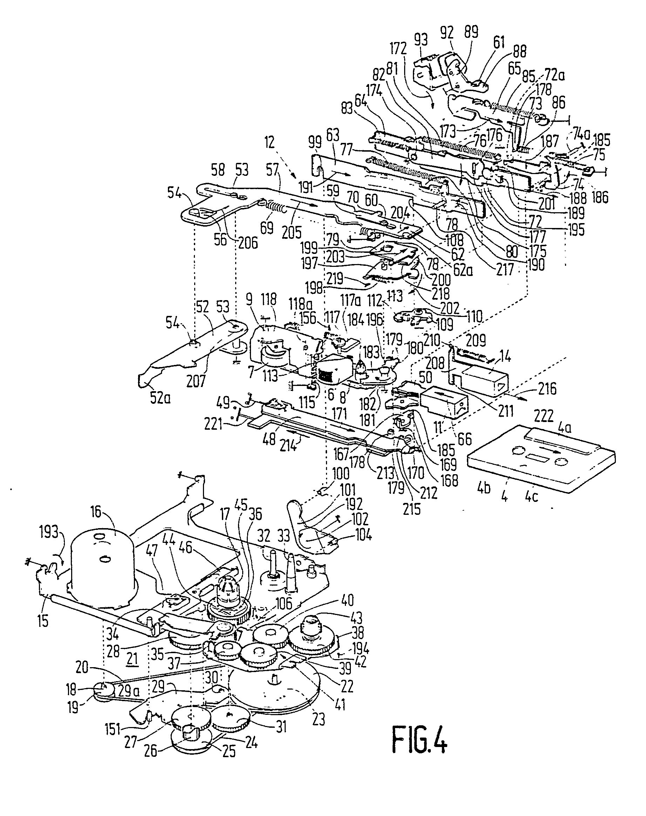

Due to the movement of the ejection member 57 in the direction of the arrow 68 the spring 77, assisted by the spring 76, exterts a force on the member 57 near one end thereof *via* the lug 70. Since the spring 69 exerts a force on the member 57 near the other end thereof, the member 57 is subjected to a clockwise moment as viewed in Fig. 1. Since the pin 54 has reached the bottom-left corner of the hole 56, the member 57 can now pivot about the pin 54. Consequently, the end portion 62 of the member 57 is moved in the direction of the arrow 97. As a result, the lug 70 is not longer retained behind auxiliary member 82. As the spindle 60 is situated in the slot 59 in the member 57, the edge of said slot presses against the spindle 60 and moves it in the direction of the arrow 219 together with the pivotal member 197. As it moves in the direction of the arrow 219 the spindle 60 pushes against the latching member 79 and the lug 78 of the latching member 79 is withdrawn from the slot 80 in the control member 63. Since, as already described, the tension spring 77 has been tensioned during the preceding movement of the switching means the control member 63 now springs in the direction of the arrow 98, which direction is parallel to the direction indicated by the arrow 71. On the side of the member 63 is a latching pin 217, which subsequently, at the end of the movement of the member 63 and the pivotal member 197 to an active position, engages an edge 218 of the pivotal member 197 and prevents this member from moving back. As a result of the movement of the end portion 62 of the ejection member 57 in the direction of the arrow 97, the edge 62a of the end portion 62, after passing out of the guide slot 13 in the support 10 in the chassis 1, engages behind the support 10. As a result of this movement the member 57 becomes latched behind the support 10 under the tension of the spring 68. The pin 217, indirectly *via* the member 197, prevents the member 57 from moving back in the opposite direction to the arrow 97, so that the pin 217, with the support 10, forms part of the latching means for the member 57. In this position of the member 57 the ejection lever 52 can pivot freely over some distance, which is determined by the edge of the hole 56, which edge acts as a stop, and by the cassette wall 4d. Thus, in the activated position of the member 57 the ejection lever 52 exerts no force on the cassette 4, so that impact forces which may occur during switching of the switching means 12 cannot be transmitted to the cassette 4, *via* the lever 52. In this respect it is also essential that the leaf spring 5 can exert sufficient pressure on the cassette 4 without being impeded by the spring 69 in order to ensure a correct positioning in the chassis 1. A further advantage at higher ambient temperatures is that no pressure occurs which may give rise to mechanical deformation of the cassette. The member 63 has a recess 99 in which a pin 100 is disposed. This pin forms part of a member 101 which is pivotally connected to the chassis 1. The displacement of the control member 63 in the direction of the arrow 98 causes the pin 100 and with it the member 101 to perform a pivotal movement about the pivotal axis 102 of the member 101 in the direction of the arrow 103. Consequently, a pin 104 will on the member 101 move in the anticlockwise direction, as viewed in Figure 4. The pin 104 is rigidly connected to the drive plate 15 and the drive plate 15 is therefore swung up into the operating position in a direction indicated by the arrow 105 as a result of the release of the spring 77. With this movement of the drive plate 15 the take-up mandrel 17 engages the hub 4b in the cassette 4 and the capstan 32 and the locating pin 33 are moved into the relevant openings in the raised front portion 4a of the cassette 4. On the drive plate 15 a leaf spring 106 is arranged, which during the pivotal movement of the drive plate 15 in the direction of the arrow 105 is first moved against the auxiliary frame 38 and then, as the drive plate 15 is pivoted further, assists in pushing up the auxiliary frame 38 with the transmission means 41 and the supply mandrel 43 arranged on this frame. This movement, indicated by the arrow 107, causes the supply mandrel 43 to engage the associated hub 4c in the cassette 4. The principal advantage of the auxiliary frame 38 which is arranged on the chassis to be movable perpendicularly thereto and which is coupled to the pivotal drive plate 15 by the leaf spring 106, is that it provides an adequate displacement of the supply mandrel 43 and ensures that enough space remains available at the front of the apparatus, for example, in the case of a car radio to accommodate control keys or push-buttons on the front panel of the car radio.

In the movement of the control member 63 in the direction of the arrow 98, an edge portion 108 of the member 63 engages a rotary plate 109 which is arranged to be pivotable on the chassis 1 about a pivotal axis 110. As a result of this the rotary plate 109 is moved about the axis 110 in the direction of the arrow 111. The rotary plate 109 comprises a hook 112, which initially retains a lug 113 which forms part of the head support 8. The pivotal movement of the plate 109 in the direction of the arrow 111 releases the lug 113 from the hook 112. An over-centre spring 166 (Fig. 2) now moves the head support 8 is pivoted towards the cassette 4 about the spindle 9 in the direction of the arrow 116. A spring 115 is attached to the head support 8 and to the chassis 1, whilst a spring 114 is attached to the head support 8 and to a pin 117 on a pressure-roller lever 118. The pin 117 is guided along an edge 117a of the chassis 1, with the pressure roller lever 118, the pin 117 is pivotable on the head support 8 about an axis 118a. During the pivotable movement of the head support 8 in the direction of the arrow 116 under the influence of the spring 115, the spring 114 pulls the pin 117 against the edge 117a. As this edge is diposed substantially tangentially relative to the spindle 9, the pressure roller 7 remains in a slightly retracted position relative to the head support 8. The spring 114 cannot pivot the pressure-roller lever 118 about the axis 118a relative to the head support until the pin 117 has reached the end of the edge 117a, so that the pressure-roller lever 118 is not pivoted until the last stage of the pivotal movement of the head support 8 is reached. In this way first the magnetic head 6 moved towards the magnetic tape in the cassette 4 and subsequently the pressure roller 7 is rapidly positioned against the capstan 32. The main advantage of this movement in stages is that the spindle 9 may be arranged comparatively close to the pressure roller 7, so that the head support 8 occupies a minimal space in the apparatus, whilst the spring 114 provides sufficient pressure for the pressure roller on the capstan 32. Since the winding mandrels 17 and 43 have already entered the cassette, the mandrel 17 and the capstan 32 are already rotating, and the pressure roller is now positioned against the capstan, the play mode of the apparatus is obtained and the signals on the tape can now be played back.

B. Pause-search Mode.

In this mode the apparatus can detect a pause of sufficient length between two passages on the tape which are modulated with signals, upon which detection the apparatus switches from a fast-winding mode to the play mode, starting with the next modulated passage on the tape. During searching the motor 16 rotates with the same speed as during fast winding, but tape transport is effected at a speed which is, for example, a maximum of 10% lower because of the friction, *inter alia* between the magnetic head and the magnetic tape. Seaching is possible in two winding directions of the magnetic tape and therefore the button 11 can be pivoted in two opposite directions in a horizontal plane.

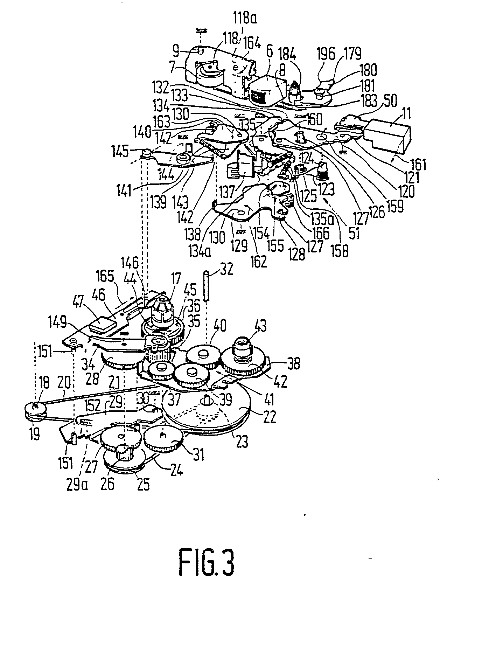

Figure 2 represents the situation in which the button 11 is moved to the right, indicated by an arrow 119. From this pivotal movement a number of movements of the switching mechanism behind the button 11 are derived. For example, as a result of said pivotal movement a plate 120 is pivoted in the direction of the arrow 122 about a spindle 121 mounted on the chassis 1. The coupling between the lug 50 and the plate 120 is such that if the button 11 is moved in the anti-clockwise direction, as indicated by arrow 119, the plate 120 is pivoted in the anti-clockwise direction. The pivotal movement of the plate 120 takes place against the force of one of the limbs of a torsion spring 123, which is wrapped around a pin 124 on the plate 120 and which, depending on the movement of the plate, bears with the other limb against a pin 125 which is connected to the chassis 1 and which extends through a slot 126 in the plate 120. Thus, the spring 123 always tends to pivot the button 11 into the neutral centre position. The plate 120 also carries a pin 127 which is disposed in an opening 128 in a pivotal member 129. This member is pivotable about a spindle 130 connected to the chassis 1 and, upon the pivotal movement of the plate 120, is pivoted in the direction of the arrow 131. The plate 120 comprises a number of cams 132, which are engageable with a hook 133 formed on a plate 134 which is pivotable relative to the chassis 1 about an axis 135. The movement of the plate 120 in the direction of the arrow 122 results in a pivotable movement of the plate 134 about the axis 135 in the direction of the arrow 136. On the pivotal member 129 is a projection 138 which bears against a member 140 which is also pivotable relative to the chassis about the spindle 130. The member 140 consequently performs a movement in the direction of the arrow 131 about the spindle 130. The member 140 has a recess in which a projection 142 on a bell-crank lever 143 engages, which lever is pivotable relative to the chassis about a pivotal axis 144. A plate 139 also is arranged on the spindle 130, which plate is pivoted by a spring 141 during the pivotal movement of the member 140, the plate 139 thus being urged against the projection 142. The bell-crank lever 143 has a projection 145 which serves to guide the lever 143 at its end which is remote from the spindle 144 in a plane which is perpendicular to said spindle. The edges of the lever 143 near the projection 145 engage a recess 146 in the switching rod 46. The movement of the member 140 and the plate 139 in the direction of the arrow 131 results in the lever 143 being pivoted in a direction 147 about its spindle 144. As a result of this, the switching bar 46 is moved in the direction of the arrow 148, so that the switch 47 is actuated and solenoid 137 is energized. When the lever 143 has reached an end-position, the button 11 moves the member 140 slightly further, so that the plate 139 presses against the projection 142 and further tensions the spring 141. The further movement of the button 11 is necessary to ensure that the plate 134 passes over the cam 132 and can swing back. Swinging back is effected in that an armature member 134a is pivoted about the spindle 135 in the direction of arrow 160 by a tension spring 158 (Fig. 3). A tension spring 135a arranged between the plate 134 and the armature member 134a ensures that the plate 134 is also pivoted back. As, in the meantime the solenoid 137 has been energized, the plate 134 is thus latched, so that the button 11 is latched in the pivoted position. However, the tension spring 135a enables the button 11 to be moved back manually. Also as a result of this change-over of the switch 47 the motor 16 receives a higher voltage and consequently begins to run faster. This results in the aforesaid faster tape transport. This means that the switch 47 is the play/wind switch of the motor 16. The aforesaid arm 34 which arm is pivotable relative to the drive plate 15 about a pivotal axis 149, is coupled to the switching bar 46. Thus, the movement of the switching bar 46 in the direction of the arrow 148 results in the arm 34 being pivoted in the direction of the arrow 150. A pin 151 is connected to the switching bar 46, which pin is movable over cams 152 formed in the arm 29. A movement of the pin 151 over ths cams 152 in the direction of the arrow 148 results in the arm 29 being pivoted about the spindle 30 in the direction of the arrow 153 against the action of the spring 29a. As a result of this, the idler wheel 28 is disengaged from the gear wheel 31. The faster motor speed is now imparted to the gear-wheel 36 *via* the gear-wheel 35, so that the take-up mandrel 17 will wind the tape at a higher speed. On the underside of the head support 8 is a pin 154 which can run along an edge 155 of the pivotal member 129 having a stepped profile. In the play mode the pin 154 is located on that part of the edge 155 which is situated at a short distance from the spindle 130. As a result of the movement of the member 129 in the direction of the arrow 131 the pin 154 is moved over a first part of the edge 155, so that the head support 8, with the magnetic head 6, moves approximately 1.6 mm backwards relative to the cassette 4 in a direction indicated by the arrow 156, the head remaining in contact with the magnetic tape or at such a small distance from the tape that a satisfactory signal is produced. The solenoid 137 latches the mechanism during winding, so that the actuating button 11 may be released. This is necessary because otherwise the mechanism would pivot back under the influence of the spring 123. This is the case both during the pause-search mode and during normal fast winding. When the button 11 is pivoted in a direction opposite to the arrow 119, as indicated by the arrow 157, the gear-wheel 35 will mesh with the gear-wheel 37. It is evident that the supply mandrel 43 is then driven instead of the take-up mandrel 17. The tape is then wound in the opposite direction. Upon detection of a pause an electric circuit, not shown, in the apparatus is actuated, which circuit deenergizes the solenoid 137. As a result of this the armature member 134a no longer keeps the pivotal plate 134 latched, so that the plate 120 is moved back in the direction of an arrow 159 under the influence of the switching spring 123. This results in the plate 134 sliding over the cam 132 and subsequently being moved in the direction of the arrow 160. This gives rise to a movement of the button 11 in the direction of the arrow 161, so that the button 11 is urged back into the centre position. This is a sign for the user of the magnetic-tape cassette apparatus that a pause is found. This may also be of advantage if no further modulation is contained on the tape, because in that case the button 11 also springs back.

Upon the movement of the plate 120 in the direction of the arrow 159 the pivotal member 129 is pivoted in the direction of the arrow 162 *via* the pin 127. This results in the member 140 being moved back in the direction of the arrow 163 and, *via* the pin 154, the head support 8, with the magnetic head being moved back in the direction of the arrow 164. Thus, the magnetic head returns to the play position in the cassette. *Via* the bell-crank lever 143 the switching bar 146 is subsequently moved back in a direction of the arrow 165, so that the switch 47 is changed over and the motor voltage is reduced again, thereby reducing the speed of the motor 16. Also, the idler wheel 35 is disengaged from the gear-wheel 36 as a result of the movement of the arm 34. Since, during the movement of the switching bar 46 the arm 29, under the influence of the spring 29a, again assumes its original position, the idler wheel 28 again establishes a connection between the small gear-wheel 26 and the gear-wheel 31.

The movement of the head support 8 in the direction of the arrow 164 is possible because the pin 154 is urged in the direction of the arrow 164 by means of the comparatively strong over-centre spring 166. During the last stage of the return movement of the head support the faster movement of the pressure roller lever 118 is obtained, as already described. It is to be noted that the present method of switching the apparatus upon detection of a pause can also be obtained if, during fast rewinding of the tape towards the supply mandrel 43, the tachometer 45 detects the stationary condition of the gear-wheel 36 and thus the leading tape end. The solenoid 137 is then de-energized, the motor speed is reduced, the drive means 21 are switched to the play mode, and the playback of the signals on the magnetic tape is repeated automatically (so-called "auto-replay").

If during fast winding of the tape to the take-up mandrel 17 the tachometer 45 detects the stationary condition of the gear wheel and thus the end of the tape, the solenoid 137 is de-energized, but in addition the switching bar 48 is unlatached, so that *via* the switch 49 the solenoid 93 is also de-energized and the apparatus is switched to the pause mode (see D).

The pause-search mode may also be terminated mechanically. This is effected by briefly pressing the button 14 (Figures 1 and 4). As a result of this an electric switch 221 is actuated, which also causes the solenoid 137 to be de-energized. Subsequently, the apparatus is switched to the normal play mode.

C. Fast-wind Mode

The fast-wind mode position of the button 11 is obtained by pivoting the button further in the direction 119 or 157 in Figure 2. In fact, the situation obtained is the same as described for the pause-search mode (B). However, in this case the pin 125 reaches the end of the slot 126. The larger pivotal movement of the plate 120 results in the pin 154 making a larger stroke, so that the head support 8 is not moved over a small distance of approximately 1 mm as in the case of pause detection, in which a moderate heat-to-tape contact exists, but is moved backwards over a larger distance in the direction of the arrow 156, so that the head is spaced from the tape. The stepped edge 155 of the member 129 determines the three positions of the head support 8 in the positions "play", "search" and "fast wind" of the button 11 (see A, B and C, respectively). The other movements during fast winding correspond to the movement already described under B. It is to be noted that returning to the play mode can be effected not only upon reaching the end of the tape or upon depression of the play button 14 but also by resetting the button 11 to the centre position.

D. Pause/eject Mode

This position is shown in Figure 4. The eject position can only be reached through the pause position.

By the pressing the button 11 substantially halfway in the direction of the arrow 66 a release member 167 is coupled to the lug 50. The member 167 is pivotable about a spindle 168, and as a result of the depression of the button 11 the member 167 pivots to bring a projection 169 thereon against a projection 170 on the switching bar 48. As a result of this, the bar 48 moves in the direction of the arrow 171 and the switch 49 is changed over. Consequently, the supply voltage to the motor 16 is interrupted, as a result of which the capstan 32 stops and the drive means 21 and the winding mandrel coupled thereto also stop. As a result of the change-over of the switch 49 the play solenoid 93 is no longer energized, so that the bell-crank lever 89 is pivoted back in the direction of the arrow 172 by the force exerted by the spring 85 *via* the lug 61. As a result of this movement the play member 65 is no longer latched behind the cam 88, so that the pause spring 85 is released and moves the play member 65 back in the direction of the arrow 173. The movement of the member 65 causes the lug 81 to move the auxiliary member 82 downwards in the direction of the arrow 175 against the force of the spring 83, which movement takes place about a spindle 174, by means of which the auxiliary member 83 is mounted on the switching member 64. This movement is limited by means of a pin 177 which is connected to the member 64 and which extends into a slot 176 in the auxiliary member 82. As a result of the movement of the play member 65 in the direction of the arrow 173 the spring 86, by means of which the member 65 is coupled to the switching bar 48, is also released. A hook portion 178 of the member 65 then abuts a stop 179 on the bar 48. During the movement of the member 65 in the direction of the arrow 173 the hook portion 178 is coupled to a pivotal member 180 which is pivotally supported by a spindle 181 on the chassis. Thus, the release of the spring 85 ultimately results in the pivotal member 180 being pivoted in the direction of the arrow 182, so that the head support 8 pivots back about the spindle 9 in the direction of the arrow 156. This is effected by a bifurcated portion 183 of the pivotal member 180 pushing against the pin 184 on the head support 8. This displacement of the head support is approximately 1.5 mm, which substantially corresponds to the situation shown in Figure 2 during the pause-search mode. It differs from the situation shown in Figure 2 in that during the search of pauses on the magnetic tape the motor 16 keeps rotating, whereas it is now stationary. The movement of the head support in the direction of the arrow 156 is opposed by the force of the two springs 115 and 166. As a result, these springs are now tensioned again. The pin 117 of the pressure-roller lever 118 is now again urged against the edge 117a of the chassis 1.

At this instant the pause situation is reached. If the button 11 has been depressed completely in the direction of the arrow 66, this results in the release member 167 being pivoted further, so that another projection 185 on the member 167 causes the main latch constituted by the hook 74 to move in the direction of the arrow 186. As a result of this, the part of the hook 74 on which the edge 73 is formed will make a downward movement in the direction of the arrow 187. Consequently, the switching member 64 is now unlatched because the spindle 72a is freed. The member 64 now abruptly moves in the direction indicated by the arrow 188 under the influence of the spring 76. The member 64 has a projection 189 on one side which cooperates with the projection 190 on one side of the control member 63 during the movement of the member 64 in the direction 188, so that the member 63 is moved in a direction indicated by the arrow 191. Owing to the engagement of the pin 100 on the pivotal member 101 in the recess 99 in the member 63 the movement of the latter member in the direction of the arrow 191 is converted into a pivotal movement of the member 101 in the direction of the arrow 192, so that the drive plate 15 is swung down in the direction of the arrow 193. As a result, the winding mandrel 46 is withdrawn from the cassette, the capstan 32 and the locating pin 33 being also disengaged from the cassette. During the movement of the drive plate 15 in the direction of the arrow 193 the leaf spring 106 also returns the auxiliary frame 38 and the transmission means 41 arranged on said frame in the direction of the arrow 194, the winding mandrel 43 being thereby withdrawn from the cassette. During the movement of the switching member 64 in the direction of the arrow 188 a shoulder 195 on the switching member 64 moves against a further stop 196 on the pivotal member 180. As the travel of the member 64 is much larger than that of the member 65, the movement of the member 64 results in a larger displacement of the head support 8 in the direction of the arrow 156 than does the movement of the member 65 upon depression of the button 11 in order to obtain the pause mode. Thus, the head support 8 is moved into the fully pivoted position. In this position the magnetic head 6 and the pressure roller 7 are completely withdrawn from the cassette 4.

The pivotal member 197 which carries the spindle 60 is arranged underneath the latching member 79. The member 197 is coupled to the member 79 by a tension spring 198. The spindle 60 extends through an opening 199 in the member 79. The lug 200 on the member 197 is positioned against a shoulder 201 on the switching member 64 at the end of the movement. When the member 64 moves in the direction of the arrow 188 the lug 200 is pivoted in the direction of the arrow 202 about a stop, not shown, on the chassis 1. As a result of this the spring 198 is tensioned and the lug 78 is moved in the direction of the arrow 203. The lug 78 then slides against the side of the control member 63 until, during the movement of this member in the direction of the arrow 191, the recess 80 meets the lug 78 and the lug engages in the recess. As a result of this, the member 63 is latched. Owing to the movement of the member 197 in the direction of the arrow 203 the spindle 60, situated in the opening 199, is also moved in the direction of the arrow 203. This movement is transmitted to the ejection member 57, which is now moved in the direction indicated by the arrow 204. As a result of this movement the edge 62a of the end portion 62 of the member 57 is disengaged from behind the support 10 on the chassis 1 and the spring 69 is thereby released, the member 57 sliding forward in the guide slot 13 in the direction of the arrow 205. During this movement the pin 54 is positioned against the edge of the hole 56 under the influence of the force exerted by the spring 69, and pin 54 moves along said edge in the direction of the arrow 206. Also during said movement the free end 52a of the ejection lever 52 is moved against the cassette 4, so that the cassette is no longer clear of the ejection lever. Subsequently, the ejection lever is pivoted about the spindle 53 in the direction of the arrow 207, so that the cassette is pushed out of the cassette compartment in the direction of the arrow 222. The advantage of coupling the ejection lever 52 at a later stage is that prior to this all elements of the apparatus which are coupled to the cassette (winding mandrils, capstan, magnetic head) can be withdrawn from the cassette.

To return from the pause mode of the apparatus to the play mode only the play button 14 need be depressed (Figures 1 and 4). The end of said button 14 is rigidly connected to a bar 208, a tension spring 209 being arranged between this bar and the chassis 1. Upon depression of the button 14 the spring 209 is tensioned slightly. Since a projection 211 on the bar 208 engages in a recess 212 in a switching bar 213, which bar is guided on the chassis 1 directly adjacent the switching bar 48, the switching bar 213 will be moved in the direction of the arrow 214. As a result of this, a projection 215 on the switching bar 213 engages the hook portion 178 of the member 65, with the result that the member 65 is again moved in the direction of the arrow 84 in Figure 1 and the spring 86 again moves the switching bar 48, in the direction of the arrow 87. The button 14 can now be released, so that the spring 209 is released and the button 14, with the bar 208, is moved back in the direction indicated by the arrow 216, thereby returning the projection 215 and hence the switching bar 213 to the rest position. The movement of the switching bar 48 and the play member 65 results in the armature 92 being positioned against the play solenoid 93 and the play solenoid being re-energized, so that the lug 61 is again latched behind the cam 88. Due to this movement of the play member 65 and with it the hook portion 78 thereof the pivotal member 180 is freed, so that the head support 8 pivots back in the direction of the arrow 164 (see Figure 3) into the play position under the influence of the force exerted by the spring 166. As a result of the movement of the switching bar 48 the motor 16 is started again, so that the pressure roller 7 is now positioned against the capstan 32 and the play mode is started. In this way it is ensured that, when the apparatus is switched to the pause mode owing to the release of the play solenoid 93 and of the pause latch 89, in principle only the pause spring 85 and the coupling spring 86 are released but the other springs which have been tensioned during insertion of the cassette, specifically the relatively strong springs 69 and 76, remain tensioned. Thus, when the apparatus is again set to the play mode by depression of the button 14 only the two springs 85 and 86 have to be tensioned again, which demands only a moderate force. As a result of this, most of the energy produced by inserting the cassette into the apparatus remains conserved in the apparatus when the apparatus is set to the pause mode. A further advantage of switching to the pause mode by means of the construction described is that the solenoid 93 makes it possible to obtain the pause mode electrically. For this reference is made to the remark under B as regards the detection of the end of the tape during winding onto the take-up mandrel 17. This precludes undesired pressure on the pressure roller and consequent damage to the pressure roller if the user has not noted that the end of the tape has been reached. A similar situation may occur if the apparatus is switched off without the button 11 being deliberately depressed and the cassette being ejected. When the apparatus is switched off the solenoid 93 is de-energized and the pressure roller 7 is disengaged from the capstan 32. Another possibility is the use of the pause mode if the magnetic-tape cassette apparatus is used in conjunction with a car radio. This yields the advantage that, if the supply voltage is turned off, which may happen if the driver turns off the car ignition, the tape deck is switched to the pause mode so that the pressure roller is disengaged from the capstan. Another possibility in the case of use in a car is that, if so-called traffic information is reproduced by the car radio, the signal used for this purpose electronically supplies a control signal to the magnetic-tape cassette apparatus. Suitably, if the apparatus is in the play mode, said control signal only stops the motor 16 electronically, so that upon termination of the traffic-information broadcast the motor is re-started immediately without the pressure roller and the head 6 being withdrawn from the tape, because in this situation the solenoid remains energized. If the apparatus is in the pause-search mode or fast-wind mode respectively the solenoid 93 remains energized during a traffic-information broadcast. The solenoid 137 (Figure 2) is de-energized, so that the situation is the same as upon reaching the end of the tape in the rewind mode. As soon as the traffic information message has ended the motor 16 is started with the normal speed and the apparatus is in the play mode.

It is to be noted that the apparatus in accordance with the invention makes it possible for a large number of parts required for the many functions that can be performed to be accommodated in a comparatively small space. Furthermore, the buttons 11 and 14 are constructed so that only a small stroke and a small force are required, whilst the control button 11 combines a plurality of functions.

## Claims

1. A magnetic-tape cassette apparatus comprising a chassis (1) on which a head support (8) carrying a pressure roller (7) and a magnetic head (6) is movably mounted, a drive plate (15) carrying drive means (21) for a capstan (32) and at least one winding mandrel (17), and a cassette compartment for receiving a magnetic-tape cassette (4), in which compartment an ejection lever (52) is pivotally mounted, which lever (52) is pivoted upon insertion of the cassette (4) into the cassette compartment and during the pivotal movement actuates an ejection member (57) for moving the head support (8) in the direction towards the cassette (4) to bring the pressure roller (7) into cooperative relationship with the capstan (32) and also tensions an ejection spring (69), which spring is kept in the tensioned condition by latching means (10, 74, 217), the ejection member (57) forms part of switching means (12), which further comprise a movable play member (65), which can be coupled to said head support (8) for moving the head support (88) in the direction away from the cassette (4) to interrupt said cooperative relationship, an actuating button (11) being provided for releasing the ejection spring (69) *via* the latching means (10, 74, 217) and thereby pivoting the ejection lever (52), characterized in that said switching means (12) also comprise a pause spring (85) connected to the play member (65), with spring (85) is tensioned as a result of a coupling between the play member (65) and the ejection member (57) when the ejection member (57) is pivoted upon insertion of the cassette (4), the play member (65) being latched by a pause latch (89) in the tensioned condition of the pause spring (85), which pause latch (89) can be actuated independently of the latching means (10, 74, 217) to release the play member (65) and when the pause latch (89) is so actuated the play member (65) is coupled to the head support (8) for moving the head support under the influence of the pause spring (85) in the direction away from the cassette (4).

2. A magnetic-tape cassette apparatus as claimed in Claim 1, characterized in that the pause latch (89) is so actuated by a solenoid (93) which is controlled by an electric switch (49), which also activates the drive means (21), and which switch is actuated by a switching bar (48) which can be coupled to the actuating button (11).

3. A magnetic-tape cassette apparatus as claimed in Claim 2, characterized in that the pause latch (89) is constituted by a bell-crank lever (89) which during tensioning of the pause spring (85) is urged towards the latched position by a spring (90).

4. A magnetic-tape cassette apparatus as claimed in Claim 3, characterized in that the play member (65) comprises a lug (81) which does not release the bell-crank lever (89) until the pause spring (85) is tensioned and which latches behind a cam (88) on the bell-crank lever (89).

5. A magnetic-tape cassette apparatus as claimed in any of the Claims 2 to 4, characterized in that the switching bar (48) is connected to the play member (65) by a coupling spring (86) by means of which the play member (65) moves the switching bar (48) when the pause spring (85) is tensioned.

6. A magnetic-tape cassette apparatus as claimed in Claim 5, characterized in that the coupling spring (86) is also tensioned when the play member (65) is latched, and the coupling spring (86) is further tensioned when the actuating button (11) is coupled to the switching bar (48) and, after actuation of the pause latch (89), causes the play member (65) to be moved together with the pause spring (85).

7. A magnetic-tape cassette apparatus as claimed in Claim 6, characterized in that there is provided a play button (14) adapted to move the play member (65), and to tension the pause spring (85), the play member (65) being coupled to the switching bar (48) *via* the coupling spring (86) for moving the switching bar (48), reenergizing the solenoid (93) and subsequently re-latching the play member (65).

8. A magnetic-tape cassette apparatus as claimed in any of the preceding Claims, characterized in that the play member (65) comprises a portion (178) which for moving the head support (8) is movable against a pivotable member (180) which is coupled to the head support (8) and which comprises two stops (179, 196) of which a first stop (179), against which said portion (178) of the play member (65) can be moved, is disposed at a greater distance from the pivotal axis (181) of said pivotal member (180) than a second stop (196), which is adapted to co-operate with a switching member (64) of the switching means (12) upon actuation of the latching means (10, 74, 217) and release of the ejection spring (69).

9. A magnetic-tape cassette apparatus as claimed in Claim 8, characterized in that the actuating button (11) can be moved from the rest position to a pause position by a displacement in a first direction, in which pause position the pause latch (89) is actuated, and the actuating button (11) is movable to an eject position by a further displacement in the first direction, in which eject position the actuating button (11) can be coupled to a main latch (74) of the latching means (10, 74, 217), which main latch (74) unlatches the switching member (64), which member subsequently moves the head support (8) away from the cassette (4) *via* the second stop (196) on said pivotal member (180).

10. A magnetic-tape cassette apparatus as claimed in any of the preceding Claims, characterized in that by coupling to a switching mechanism (129) the actuating button (11) can be moved both from a rest position to a pause position and subsequently to an eject position in a first direction and is movable in a second direction and in a third direction, which is opposite to the second direction, the button (11) being movable from the rest position to a search position and subsequently to a fast-wind position both in the second direction and in the third direction, and the switching mechanism (129) for positioning the head support (8) in three positions relative to the cassette, comprising a pivotal member (129) with a stepped edge (155) along which a pin (154) connected to the head support (8) is movable and can be positioned in three positions, the position of the head support (8) in the search position of the actuating button (11) corresponding to its position in the pause position of the actuating button (11).

**Patentansprüche**

1. Magnetbandkassettengerät mit einem Chassis (1), auf dem ein Kopfträger (8) mit einer Anpressrolle (7) und einem Magnetkopf (6) beweglich angeordnet ist, einer Antriebsplatte (15) mit Antriebsmitteln (21) für eine Antriebswelle (32) und mit wenigstens einem Wickeldorn (17), und mit einem Kassettenraum zum Aufnehmen einer Magnetbandkassette (4), wobei in diesem Raum ein Auswurfhebel (52) schwenkbar angeordnet ist, wobei dieser Hebel (52) beim Einführen einer Kassette (4) in den Kassettenraum verschwenkt wird und beim Verschwenken ein Auswurfelement (57) zum Bewegen des Kopfträgers (8) in Richtung der Kassette (4) betätigt, um die Anpressrolle (7) in eine zusammenarbeitende Beziehung mit der Antriebswelle (32) zu bringen, und ebenfalls eine Auswurffeder (69) spannt, wobei diese Feder in dem gespannten Zustand gehalten wird durch Verriegelungsmittel (10, 74, 217), wobei das Auswerfelement (57) einen Teil von Schaltmitteln (12) bildet, die weiterhin ein bewegliches Spielelement (65) aufweisen, das mit dem genannten Kopfträger (8) zum Bewegen des Kopfträgers (88) in der Richtung weg von der Kassette (4) zum Unterbrechen der zusammenarbeitenden Beziehung, enthalten, wobei weiterhin ein Betätigungsknopf (11) vorgesehen ist zum Entspannen der Auswurffeder (69) über die Verriegelungsmittel (10, 74, 217), wobei der Auswurfhebel (52) sich dreht, dadurch gekennzeichnet, dass die genannten Schaltmittel (12) ebenfalls eine Pausefeder (85) aufweisen, die mit dem Spielelement (65) verbunden ist, wobei diese Feder (85) infolge einer Kupplung zwischen dem Spielelement (65) und dem Auswurfelement (57) gespannt wird, wenn das Auswurfelement (57) beim Einführen der Kassette (4) gedreht wird, wobei das Spielelement (65) durch eine Pauseverriegelung (89) in dem gespannten Zustand der Pausefeder (85) verriegelt wird, wobei diese Pauseverriegelung (89) abhängig von den Verriegelungsmitteln (10, 74, 217) zum Freigeben des Spielelementes (65) betätigt werden kann und wenn die Pauseverriegelung (89) derart betätigt wird, dass das Spielelement (65) mit dem Kopfträger (8) gekuppelt wird zum Bewegen des Kopfträgers unter dem Einfluss der Pausefeder (85) in der Richtung weg von der Kassette (4).

2. Magnetbandkassettengerät nach Anspruch 1, dadurch gekennzeichnet dass die Pauseverriegelung (89) durch ein Solenoid (93) betätigt wird, das durch einen elektrischen Schalter (49) gesteuert wird, der ebenfalls die Antriebsmittel (21) betätigt, wobei dieser Schalter durch eine Schaltstange (48) betätigt wird, die mit dem Betätigungsknopf (11) gekuppelt sein kann.

3. Magnetbandkassettengerät nach Anspruch 2, dadurch gekennzeichnet, dass die Pauseverriegelung (89) durch einen Kniehebel (89) gebildet ist, der beim Spannen der Pausefeder (85) durch eine Feder (90) in die verriegelte Lage gedrückt wird.

4. Magnetbandkassettengerät nach Anspruch 3, dadurch gekennzeichnet, dass der Spielelement (65) eine Zunge (81) aufweist, die den Kniehebel (89) erst freigibt, wenn die Pausefeder (85) gespannt wird und die hinter einem Nocken (88) auf dem Kniehebel (89) verriegelt wird.

5. Magnetbandkassettengerät nach einem der Ansprüche 2 bis 4, dadurch gekennzeichnet, dass die Schaltstange (48) durch eine Kupplungsfeder (86) mit dem Spielelement (65) verbunden ist, wobei mit Hilfe dieser Kupplungsfeder das Spielelement (65) die Schaltstange (48) bewegt, wenn die Pausefeder (85) gespannt wird.

6. Magnetbandkassettengerät nach Anspruch 5, dadurch gekennzeichnet, dass die Kupplungsfeder (86) ebenfalls gespannt wird, wenn das Spielelement (65) verriegelt wird, und dass die Kupplungsfeder (86) weiterhin gespannt wird, wenn der Betätigungsknopf (11) mit der Schaltstange (48) gekuppelt wird und, nach Betätigung der Pauseverriegelung (89), verursacht, dass das Spielelement (65) zusammen mit der Pausefeder (85) bewegt wird.

7. Magnetbandkassettengerät nach Anspruch 6, dadurch gekennzeichnet, dass ein Spielknopf (14) vorgesehen ist, der das Spielelement (65) bewegt und die Pausefeder (85) spannt, wobei das Spielelement (65) mittels der Kupplungsfeder (86) mit der Schaltstange (48) gekuppelt wird zum Bewegen der Schaltstange (48), wodurch das Solenoid (93) neu erregt und folglich das Spielelement (65) neu verriegelt wird.

8. Magnetbandkassettengerät nach einem der vorstehenden Ansprüche, dadurch gekennzeichnet, dass das Spielelement (65) einen Teil (178) aufweist, der zum Bewegen des Kopfträgers (8) gegen ein drehbares Element (180) beweglich ist, das mit dem Kopfträger (8) gekuppelt ist und zwei Anschläge (179, 196) aufweist, wobei ein erster Anschlag (179), gegen den der genannte Teil (178) des Spielelementes (65) bewegt werden kann, in einem grösseren Abstand von der Drehachse (181) des genannten Drehelementes (180) liegt als ein zweiter Anschlag (196), der bei Betätigung der Verriegelungsmittel (10, 74, 217) und beim Freigeben der Auswerffeder (69) mit einem Schaltelement (64) der Schaltmittel (12) zusammenarbeitet.

9. Magnetbandkassettengerät nach Anspruch 8, dadurch gekennzeichnet, dass der Betätigungsknopf (11) durch eine Verschiebung in einer ersten Richtung aus der Ruhelage in die Pauselage bewegt werden kann, wobei in der Pauselage die Pauseverriegelung (89) betätigt wird und durch eine weitere Verschiebung in der ersten Richtung der Betätigungsknopf (11) in eine Answurflage beweglich ist, wobei in dieser Auswerflage der Betätigungsknopf (11) mit einer Hauptverriegelung (74) der Verriegelungsmittel (10, 74, 217) gekuppelt werden kann, wobei diese Hauptverriegelung (74) das Schaltelement (64) entriegelt, das danach den Kopfträger (8) von der Kassette (4) wegbewegt und zwar durch den zweiten Anschlag (196) auf dem genannten Drehelement (180).

10. Magnetbandkassettengerät nach einem der vorstehenden Ansprüche, dadurch gekennzeichnet, dass durch Kupplung mit einem Schaltmechanismus (129) der Betätigungsknopf (11) aus einer Ruhelage in eine Pauselage bewegt werden kann und folglich in eine Auswerflage in einer ersten Richtung und in einer zweiten Richtung sowie in einer dritten Richtung beweglich ist, wobei diese dritte Richtung zu der zweiten Richtung entgegengesetzt ist, wobei der Knopf (11) aus der Ruhelage in eine Suchlage und danach in eine Schnellauflage in der zweiten Richtung sowie in der dritten Richtung gebracht werden kann und wobei der Schaltmechanismus (129) zum Positionieren des Kopfträgers (8) in drei Lagen gegenüber der Kassette ein Drehelement (129) mit einem gestuften Rand (155) aufweist, an dem entlang ein mit dem Kopfträger (8) verbundener Stift (154) beweglich ist und in drei Positionen positioniert werden kann, wobei die Position des Kopfträgers (8) in der Suchlage des Betätigungsknopfes (11) der Position in der Pauselage des Betätigungsknopfes (11) entspricht.

**Revendications**

1. Appareil à cassette de bande magnétique comprenant un châssis (1) sur lequel un support de tête (8) portant un galet presseur (7) et une tête magnétique (6) est monté mobile, une platine d'entraînement (15) portant des moyens d'entraînement (21) pour un cabestan (32) et au moins un mandrin de bobinage (17) et un compartiment à cassette destiné à recevoir une cassette de bande magnétique (4) et dans lequel un levier d'éjection (52) est monté à pivot, ce levier (52) pivotant lors de l'introduction de la cassette (4) dans le compartiment à cassette, actionnant, pendant le mouvement de pivotement, un organe d'éjection (57) pour déplacer le support de tête (8) en direction de la cassette (4) afin d'amener le galet presseur (7) dans une position de coopération avec le cabestan (32) et tendant aussi un ressort d'éjection (69) qui est maintenu dans l'état tendu par un moyen de verrouillage (10, 74, 217), l'organe d'éjection (57) faisant partie de moyens de commutation (12) qui comprennent en outre un organe de lecture mobile (65) qui peut être couplé au support de tête (8) pour déplacer le support de tête (8) dans un sens s'écartant de la cassette (4) afin d'interrompre la dite coopération, un bouton d'actionnement (11) étant prévu pour libérer le ressort d'éjection (69) par l'intermédiaire du moyen de verrouillage (10, 74, 217) et ainsi faire pivoter le levier d'éjection (52), caractérisé en ce que les moyens de commutation (12) comprennent aussi un ressort de pause (85) relié à l'organe de lecture (65), ce ressort (85) étant tendu à l'intervention d'un accouplement entre l'organe de lecture (65) et l'organe d'éjection (57) lorsque l'organe d'éjection (57) pivote au moment de l'introduction de la cassette (4), l'organe de lecture (65) étant verrouillé par un loquet de pause (89) dans l'état tendu du ressort de pause (85), ce loquet de pause (89) pouvant être actionné indépendamment du moyen de verrouillage (10, 74, 217) pour libérer l'organe de lecture (65) et, lorsque le loquet de pause (89) est ainsi actionné, l'organe de lecture (65) est couplé au support de tête (8) pour déplacer le support de tête sous l'influence du ressort de pause (85) dans un sens s'écartant de la cassette (4).

2. Appareil à cassette de bande magnétique suivant la revendication 1, caractérisé en ce que le loquet de pause (89) est actionné par un solénoide (93) qui est commandé par un interrupteur électrique (49) qui active également les moyens d'entraînement (21), cet interrupteur étant actionne par une barre de commutation (48) qui peut être couplée au bouton d'actionnement (11).

3. Appareil à cassette de bande magnétique suivant la revendication 2, caractérisé en ce que le loquet de pause (89) est constitué par un levier coudé (89) qui, pendant que le ressort de pause (85) est tendu, est sollicité vers la position verrouilleée par un ressort (90).

4. Appareil à cassette de bande magnétique suivant la revendication 3, caractérisé en ce que l'organe de lecture (65) comprend une oreille (81) qui ne libère le levier coudé (89) que lorsque le ressort de pause (85) est tendu et qui se verrouille derrière une came (88) sur le levier coudé (89).

5. Appareil à cassette de bande magnétique suivant l'une quelconque des revendications 2 à 4, caractérisé en ce que la barre de commutation (48) est reliée à l'organe de lecture (65) par un ressort de couplage (86) au moyen duquel l'organe de lecture (65) déplace la barre de commutation (48) lorsque le ressort de pause (85) est tendu.

6. Appareil à cassette de bande magnétique suivant la revendication 5, caractérisé en ce que le ressort de couplage (86) est aussi tendu lorsque l'organe de lecture (65) est verrouillé et le ressort de couplage (86) est tendu davantage lorsque le bouton d'actionnement (11) est couplé à la barre de commutation (48) et, après actionnement du loquet de pause (89), provoque le déplacement de l'organe de lecture (65) en compagnie du ressort de pause (85).

7. Appareil à cassette de bande magnétique suivant la revendication 6, caractérisé en ce qu'un bouton de lecture (14) est prévu et est à même de déplacer l'organe de lecture (65) et de tendre le ressort de pause (86), l'organe de lecture (65) étant couplé à la barre de commutation (48) par l'intermédiaire du ressort de couplage (86) pour déplacer la barre de commutation (48), réexcitant le solénoïde (93) et reverrouillant ultérieurement l'organe de lecture (65).

8. Appareil à cassette de bande magnétique suivant l'une quelconque des revendications précédentes, caractérisé en ce que l'organe de lecture (65) comprend une partie (178) qui, pour déplacer le support de tête (8), peut être amenée contre un organe pivotant (180) qui est couplé au support de tête (8) et qui comprend deux arrêts (179, 196) dont un premier arrêt (179) contre lequel la dite partie (178) de l'organe de lecture (65) peut être déplacée, est disposé à une plus grande distance de l'axe de pivotement (181) de l'organe pivotant (180) qu'un second arrêt (196) qui est destiné à coopérer avec un organe de commutation (64) des moyens de commutation (12) lorsque les moyens de verrouillage (10, 74, 217) sont actionnés et que le ressort d'éjection (69) est libéré.

9. Appareil à cassette de bande magnétique suivant la revendication 8, caractérisé en ce que le bouton d'actionnement (11) peut être déplacé à partir de la position de repos vers une position de pause par un déplacement dans un premier sens et, dans cette position de pause, le loquet de pause (89) est actionné et le bouton d'actionnement (11) peut être déplacé vers une position d'éjection par un autre déplacement dans le premier sens, le bouton d'actionnement (11) pouvant, dans cette position d'éjection, être couplé à un loquet principal (74) des moyens de verrouillage (10, 74, 217), le loquet principal (74) déverrouillant l'organe de commutation (64) qui déplace ultérieurement le support de tête (8) dans un sens l'écartant de la cassette (4) par l'intermédiaire du second arrêt (196) prévu sur l'organe pivotant (180).

10. Appareil à cassette de bande magnétique suivant l'une quelconque des revendications précédentes, caractérisé en ce que, par couplage à mécanisme de commutation (129), le bouton a'actionnement (11) peut être déplacé à la fois à partir d'une position de ropos vers une position de pause, puis vers une position d'éjection dans un premier sens et est mobile dans un deuxième sens et dans un troisième sens qui est opposé au deuxième, le bouton (11) pouvant être déplacé à partir de la position de repos vers une position de recherche et ultérieurement vers une position de bobinage rapide dans le deuxième et dans le troisième sens, et la mécanisme de commutation (129) destiné à positionner le support de tête (8) dans trois positions par rapport à la cassette comprenant un organe pivotant (129) avec un bord à échelons (155) le long duquel un ergot (154) relié au support de tête (8) est mobile et peut être positionné dans trois positions, la position du support de tête (8) dans la position de recherche du bouton d'actionnement (11) correspondant à sa position dans la position de pause du bouton d'actionnement (11).

FIG.1

FIG.2

FIG.3

FIG.4